# EUROPÄISCHE PATENTSCHRIFT

(11) **EP 0 435 075 B1**
(45) Veröffentlichungstag und Bekanntmachung des Hinweises auf die Patenterteilung: **27.10.1993**
(21) Anmeldenummer: 90123927.7
(22) Anmeldetag: 12.12.1990
(51) Int. Cl.: H01B 17/58, H02G 3/06

(54) **Elastische Tülle**
Elastic grommet
Manchon élastique

(30) Priorität: 23.12.1989 DE 3942776
(43) Veröffentlichungstag der Anmeldung: 03.07.1991
(73) Patentinhaber: Kabelwerke Reinshagen GmbH, D-42369 Wuppertal (DE)
(72) Erfinder: Schekalla, Peter, W-5600 Wuppertal 11 (DE); Hauzeur, Burkart, Dipl.-Ing., W-4150 Krefeld (DE)
(74) Vertreter: Priebisch, Rüdiger, Dipl.-Ing., Dipl.-Wirtsch.-Ing. (FH)

(56) Entgegenhaltungen:
- DE-A- 3 500 655
- GB-A- 930 921
- US-A- 4 282 627

## Beschreibung

Die Erfindung betrifft eine elastische Tülle nach der Präambel des Anspruches 1

Tüllen der gattungsgemäßen Art sind bekannt. Sie dienen zur Durchführung von elektrischen Leitungen, Leitungsbündeln, Rohren und dergleichen, vergl. DE 35 24 278 C1.

Tüllen dieser Art werden z. B. zur Durchführung von Teilen eines elektrischen Kabelsatzes in einem Kraftfahrzeug eingesetzt. Dabei werden Leitungen oder Leitungsbündel, auch bandiert oder in Rohren, durch Trennwände, z. B. durch ein Karosserieblech, hindurch- oder in elektrische Geräte, wie z.B. zentrale Schaltkästen, eingeführt.

Derartige Durchführungs- oder Einführungstüllen müssen dicht, insbesondere gegen Staub und Spritzwasser, ausgebildet sein. Hierzu werden in herkömmlicher Weise Tüllen aus Gummi und dergleichen verwendet, die entweder eine runde oder eine etwa rechteckige Grundform aufweisen. Bei den rechteckigen Tüllen ist eine Schmalseite des Rechtecks zu einem Halbkreis oder dergleichen abgerundet, die andere Schmalseite ist mit einem Trennschlitz versehen, durch den die Leitung oder dergleichen einlegbar ist, bevor die Tülle in einen Wandschlitz eingesetzt wird, wodurch sich der Trennschlitz schließt. Bei den bekannten Tüllen ist das Durchführungsloch mit einer umlaufenden Dichtlippe versehen. Jede Tülle dieser Art kann nur mit einem bestimmten Leitungsdurchmesser zusammenwirken, wenn eine gewisse Abdichtwirkung erzielt werden soll. Bei zu kleinem Leitungsdurchmesser ergibt sich ein ringförmiger Spalt, bei zu großem Durchmesser der eingelegten Leitung spreizt sich die ja ebenfalls getrennte Dichtlippe an der Trennfuge auseinander, so daß in beiden Fällen Wasser und Staub durchdringen können. Dieser prinzipielle Nachteil kann durch die Anordnung eines an sich bekannten trichterförmigen Tüllenteils nicht vermieden werden, da auch die Randteile des Trichters auseinanderstreben.

Aus der DE 38 07 840 C1 ist eine Tülle bekannt, bei der zwei Einsatzteilstücke sich an unterschiedliche Durchmesser von Leitungen oder dergleichen anpassen können. Neben dem Umstand, daß zwei Teile erforderlich sind, ergeben sich insgesamt vier abzudichtende Schlitze, zwei am Tüllenrand und zwei im Bereich der sich überlappenden Dichtlippen, was die Sicherheit der Abdichtung vermindert.

Tüllen mit besonders gestalteten Dichtlippen sind aus der DE 88 05 420 U1 und DD 200 961 bekannt. Diese betreffen jedoch weder gattungsgemäß geschlitzte Tüllen, noch sichelförmige Dichtlippen.

Der Erfindung liegt das Bestreben zugrunde, eine Tülle der eingangs genannten Art so zu verbessern, daß ein und dieselbe Tülle auch ohne weitere Bearbeitung wahlweise eine größere Bandbreite von Leitungen mit unterschiedlichem Durchmesser spritzwasser- und staubdicht aufnehmen kann.

Dieses Ziel wird durch die Ausbildung der Tülle nach den Merkmalen des Anspruches 1 erreicht.

Hauptgedanke der Erfindung ist es also, den Wandbereich der Tülle, der zur Schließung der Trennfuge dient, relativ starr auszubilden, den übrigen Wandbereich des Durchgangsloches jedoch so elastisch zu gestalten, daß er sich unterschiedlichen Durchmessern von Leitungen anpassen kann. Dieser Gedanke kann sowohl bei runden als auch bei rechteckigen oder sonstigen Tüllen verwirklicht werden.

Vorteilhafte Ausbildungen der Tülle sind in den Ansprüchen 2 bis 8 definiert. Bei der Anordnung nach Anspruch 8 ist die Gefahr, daß an der Tülle oder Wand herabtropfendes Wasser durch die Tülle dringt, sehr gering, da der kraftschlüssig geschlossene Trennschlitz geschützt, nach unten weisend, angeordnet ist.

Mit der nachfolgend dargestellten Ausführung ist eine etwa rechteckige Ausnehmung in einer Wand, z. B. eines Gerätes, gut abzudichten. Aber die Erfindung ist auch bei runden, elliptischen oder ähnlichen Tüllenumrissen anwendbar. Durch die unter radialer Vorspannung eingesetzte Tülle ist in jedem Falle eine dichte, flexible und vielseitige Durchführung geschaffen.

Im nachfolgenden Ausführungsbeispiel ist die Trennfuge optimal dem abgerundeten Bereich der Tülle zugeordnet und entsprechend gegenüber der sichelförmigen Dichtlippe angeordnet. Es ist jedoch auch möglich, die Trennfuge an die gerade Kante der Tülle zu legen und die Dichtlippe entsprechend um 180 ° gedreht an die abgerundete Seite anzuordnen, wenn dies gewünscht wird, z. B. bei anderer Einbaulage.

In der Zeichnung ist ein Ausführungsbeispiel der Erfindung dargestellt.
- Figur 1: zeigt eine Draufsicht auf die Tülle, mit angedeuteter Wand.
- Figur 2: zeigt die Ansicht der Tülle von unten, ohne Wand.
- Figur 3: zeigt den Schnitt III/III in Figur 1, ohne Wand.
- Figur 4: zeigt den Schnitt III/III durch die Tülle nach Figur 1, aber mit eingesetzter Leitung.

Die Tülle 1 ist aus einem für den Anwendungsfall geeigneten elastischen Werkstoff, wie Gummi, Silikon oder dergleichen, z. B. im Spritzgießverfahren, hergestellt. Sie hat im wesentlichen eine flache, nahezu rechteckige Gestalt. An drei Seiten ist ihr Rand 2 mit einer Nut 3 versehen. An einer geraden Schmalseite ist dem Rand 2 eine Wulst 4 angeformt. Die abgerundete Schmalseite hat die Form eines Halbkreises. Aber auch die Form zweier Viertelkreise, die durch eine Gerade miteinander verbunden sind, ist möglich. Die Hauptebene ist mit Y-Y bezeichnet.

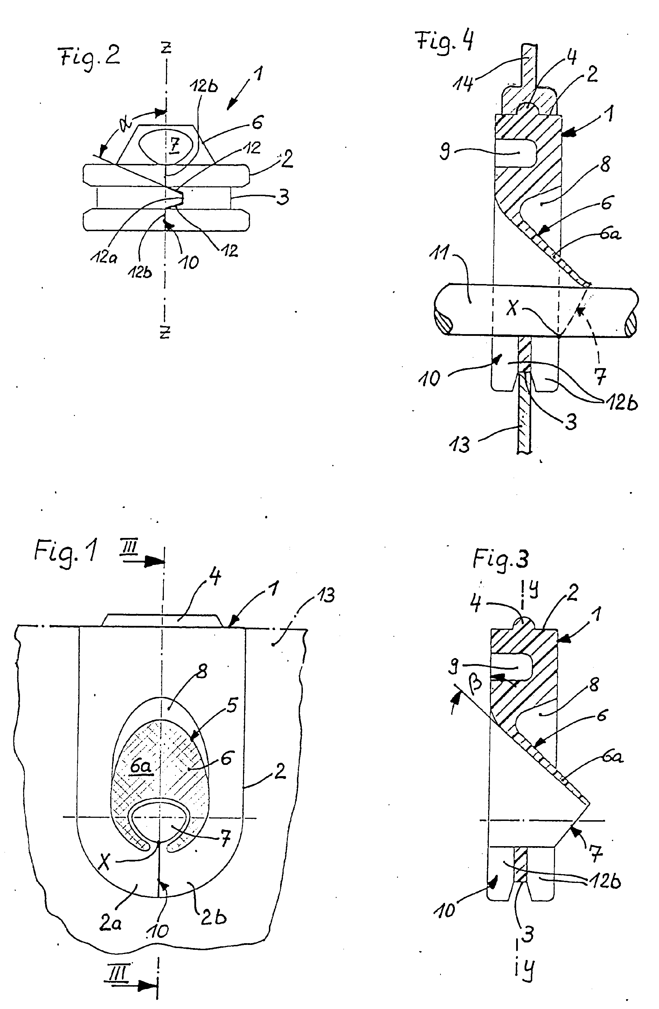

Im mittleren Bereich ist die Tülle 1 in einem etwa elliptisch gestalteten Bereich 5 schwächer ausgebildet. Eine membranartige, elastische sowie leicht trichterförmige Dichtlippe 6 in Form einer Ausstülpung bildet an ihrem kleinsten Durchmesser ein Loch 7 zur Aufnahme einer elektrischen Leitung. Die Wand 6a der Dichtlippe 6 hat, siehe Fig. 1, etwa die Form einer Sichel, deren Enden sich in der Trennfuge 10 annähern. Neben der Dichtlippe 6 ist eine ebenfalls leicht sichelförmige Vertiefung 8 ausgebildet. Auf der anderen Seite der Tülle 1 ist eine Ausnehmung 9 eingebracht, welche die Dicke der Tülle 1 etwa halbiert. Beide, Vertiefung 8 und Ausnehmung 9, vermindern die benötigte Materialmenge und geben der Tülle 1 allseitig eine gute Elastizität, die eventuelle Maßabweichungen ausgleicht.

Die Wand 6a steht im Winkel Beta zur Ebene Y-Y, und ihre Dicke nimmt zum Loch 7 hin ab. Das Loch 7 ist über eine Trennfuge 10 mit dem Rand verbunden: Hierdurch können Randteile 2a und 2b auseinandergebogen werden, so daß eine zu Figur 4 beschriebene elektrische Leitung 11 seitlich, also in radialer Richtung, in das Loch 7 einbringbar ist. Nach dem Einbringen der Leitung 11 nehmen die Randteile 2a und 2b wieder ihr dargestellte Ausgangslage ein.

Zur Abdichtung der Trennfuge 10 ist diese gestuft ausgebildet. Diese Stufung kann in Form eines Labyrinths geschehen. Vorzugsweise sind Dichtflächen 12 vorgesehen, die in einem Winkel Alpha zur Hauptebene Z-Z der Trennfuge 10 stehen. Hier sind zwei derartige Dichtflächen 12 angeordnet, die über eine Dichtfläche 12a parallel zur Hauptebene Z-Z miteinander verbunden sind. Nach außen gehen die Dichtflächen 12 in Dichtflächen 12b über. Es können aber auch mehrere derartige Dichtflächen 12 vorgesehen werden, so daß sich eine W-förmige oder Doppel-W-förmige Gestaltung ergibt.

Eine erfindungsgemäße Tülle kann mit der eingelegten Leitung unter radialer Vorspannung in eine Öffnung einer Wand eingesetzt oder bei runder oder nahezu runder Form mit umlaufender Nut "eingeknöpft" werden. Dann sorgt die radiale Spannung für eine dichte Ausbildung der Trennfuge, d. h. die Randteile werden dicht aneinander gedrückt.

In Figur 4 ist eine Durchführung mit einer erfindungsgemäßen Tülle dargestellt. In diesem Falle wird die nahezu rechteckige Tülle 1 bei eingelegter Leitung 11 mit ihren Randteilen 2a und 2b voran, also mit der Trennfuge 10 nach unten weisend, in einen nicht näher dargestellten Randschlitz einer angedeuteten Wand 13 eingeschoben.

Dabei befindet sich der Schlitzrand der Wand 13 in der Nut 3 der Tülle 1. Der Schlitzrand ist der Seite der Tülle 1 im Radius bzw. in der abgerundeten Form angepaßt, so daß nach dem Einschieben der Tülle 1 die beiden Randteile 2a und 2b gegeneinander gepreßt werden und die Trennfuge 10 abdichten. Dabei schmiegt sich die als Ausstülpung geformte sichelförmige Dichtlippe 6 um die Leitung 11. Nur im Bereich der Sichelöffnung, im Punkt X,wird die Leitung 11 gegen den im Bereich der Trennfuge 10 relativ breiten, starren, aus den Randteilen 2a und 2b gebildeten Randkörper der Tülle 1 gedrückt, da hier keine Dichtlippe 6 vorhanden ist, vergl. Fig. 1.

Im dargestellten Beispiel nach Figur 4 dient dann der Wulst 4 zur dichten Aufnahme eines weiteren, nicht näher dargestellten Wandteils, z. B. eines quer zur Wand 13 sich erstreckenden Deckels 14 oder dergleichen, z. B. bei einem Schaltkasten.

### Bezugszeichen-Liste

- Tülle: 1
- Rand der Tülle: 2
- Randteile: 2a, 2b
- Nut der Tülle: 3
- Wulst der Tülle: 4
- elliptischer Bereich: 5
- Dichtlippe: 6
- Wand: 6a
- Durchführungsloch: 7
- Vertiefung: 8
- Ausnehmung: 9
- Trennfuge: 10
- Leitung: 11
- Dichtflächen: 12, 12a, 12b
- Wand: 13
- Deckel: 14
- Hauptebene von 1: Y-Y
- Hauptebene von 10: Z-Z
- Winkel zwischen Z-Z und 12: Alpha
- Winkel zwischen Y-Y und 6a: Beta
- Sichelöffnung: X

## Patentansprüche

1. Elastische Tülle (1) zum Einsatz in eine Wand (13) und zur dichten Durchführung einer elektrischen Leitung (11), eines Leitungsbündels, Rohres oder dergleichen, mit einem Tüllenkörper, der mit einem von einer elastischen Dichtlippe (6) begrenzten Durchführungsloch (7) versehen ist, das über eine radiale Trennfuge (10) zum Einlegen der Leitung (11) oder dergleichen zugänglich ist, dadurch gekennzeichnet, daß die elastische Dichtlippe (6) sichelförmig ausgebildet und die Trennfuge (10) im Bereich der Sichelöffnung (X) angeordnet ist.

2. Elastische Tülle (1) nach Anspruch 1, gekennzeichnet durch folgende Merkmale:
a) Die Tülle (1) ist im wesentlichen rechteckig ausgebildet;
b) Die Trennfuge (10) ist an einer abgerundeten Schmalseite (2a, 2b) angeordnet;
c) Im Bereich des Durchführungsloches (7) ist eine annähernd trichterförmige, elastische Dichtlippe (6) in Form einer Ausstülpung angeformt;
d) Die Dichtlippe (6) weist eine sichelförmige elastische Wand (6a) auf, die sich nahezu 360° um das Durchführungsloch (7) erstreckt und
e) die Trennfuge (10) ist im Bereich der Sichelöffnung (X) angeordnet.

3. Tülle nach Anspruch 1 oder 2, dadurch gekennzeichnet, daß die Dichtlippe (6) als Ausstülpung in einem Winkel (Beta) von 5 bis 90° zur Hauptebene (Y-Y) der Tülle (1) steht.

4. Tülle nach einem der Ansprüche 1 bis 3, dadurch gekennzeichnet, daß am äußeren Rand (2) der Tülle (1) minddestens ein Nut (3) angeformt ist.

5. Tülle nach einem der Ansprüche 2 bis 4, dadurch gekennzeichnet, daß der Rand (2) der Tülle (1) an den beiden Längsseiten und an der abgerundeten Schmalseite mit mindestens einer Nut (3) versehen ist, und daß an der geraden Schmalseite mindestens eine Dichtwulst (4) angeformt ist.

6. Tülle nach Anspruch 5, dadurch gekennzeichnet, daß nahe der geraden Schmalseite eine parallel zum Wulst (4) verläufende Ausnehmung (9) eingebracht ist, in deren Bereich die Dicke der Tülle (1) auf mindestens die Hälfte reduziert ist.

7. Tülle nach einem der Ansprüche 1 bis 6, dadurch gekenneichnet, daß die Stärke der Dichtlippe (6) zum Durchführungsloch (7) hin abnimmt.

8. Tülle nach einem der Ansprüche 1 bis 7, gekennzeichnet durch ihre Anordnung in einer etwa senkrecht stehenden Wand (13), wobei die Trennfuge (10) nach unten weist.

## Claims

1. An elastic grommet (1) for insertion in a wall (13) and for the sealing-tight guidance of an electric cable (11), a cable bundle, pipe or the like, with a grommet body, which is provided with a through aperture (7) defined by an elastic sealing lip (6) and accessible via a radial gap (10) for the insertion of the cable (11) or the like, characterised in that the elastic sealing lip (6) is sickle-shaped and the gap (10) is arranged in the region of the sickle opening (X).

2. An elastic grommet (1) according to claim 1, characterised by the following features:
a) The grommet (1) is substantially rectangular;
b) the gap (10) is arranged on a rounded narrow side (2a, 2b);
c) an approximately funnel-shaped, elastic sealing lip (6) in the form of a protuberance is formed onto the grommet body in the region of the through aperture (7);
d) the sealing lip (6) comprises a sickle-shaped elastic wall (6a), which extends around the through aperture (7) through approximately 360°, and
e) the gap (10) is arranged in the region of the sickle opening (X).

3. A grommet according to claim 1 or 2, characterised in that the sealing lip (6) is arranged as a protuberance at an angle (beta) of between 5 and 90° relative to the main plane (Y-Y) of the grommet (1).

4. A grommet according to one of claims 1 to 3, characterised in that at least one groove (3) is formed onto the outer edge (2) of the grommet (1).

5. A grommet according to one of claims 2 to 4, characterised in that the edge (2) of the grommet (1) is provided on the two longitudinal sides and on the rounded narrow side with at least one groove (3), and at least one sealing bead (4) is formed onto the straight narrow side.

6. A grommet according to claim 5, characterised in that a recess (9) extending parallel to the bead (4) is provided in the vicinity of the straight narrow side, the thickness of the grommet (1) being reduced by at least half in the region of the said recess (9).

7. A grommet according to one of claims 1 to 6, characterised in that the thickness of the sealing lip (6) decreases in the direction of the through aperture (7).

8. A grommet according to one of claims 1 to 7, characterised by the arrangement of the grommet in an approximately vertical wall (13), the gap (10) pointing downwards.

## Revendications

1. Manchon élastique (1) destiné à être monté dans une paroi (13) et en vue de la traversée étanche d'un conducteur électrique (11), d'un faisceau de conducteurs, d'un tube ou analogue, comprenant un corps qui est muni d'un trou de traversée (7) limité par une lèvre d'étanchéité (6), trou qui est accessible par l'intermédiaire d'une fente ou joint de séparation radial (10) pour la mise en place du conducteur (11) ou analogue, caractérisé en ce que la lèvre d'étanchéité élastique est constituée sous forme d'un croissant et le joint de séparation (10) est prévu dans la région de l'ouverture (X) du croissant.

2. Manchon élastique (1) selon la revendication 1, caractérisé par les particularités suivantes:
a) le manchon (1) est de constitution sensiblement rectangulaire;
b) le joint de séparation (10) est prévu sur un côté étroit et arrondi (2a, 2b);
c) une lèvre d'étanchéité élastique (6) sensiblement en forme d'entonnoir est constituée sous forme d'une manchette dans la région du trou de traversée (7);
d) la lèvre d'étanchéité (6) comprend une paroi élastique en forme de croissant (6a) s'étendant sur presque 360 autour du trou de traversée (7);
e) le joint de séparation (10) est prévu dans la région de l'ouverture (X) du croissant.

3. Manchon selon la revendication 1 ou 2, caractérisé en ce que la lèvre d'étanchéité (6) qui est constituée sous forme d'une manchette forme un angle (β) de 5 à 90 avec le plan principal (Y-Y) du manchon (1).

4. Manchon selon l'une quelconque des revendications 1 à 3, caractérisé en ce qu'une gorge (3) au moins est formée sur le bord externe (2) du manchon (1).

5. Manchon selon l'une quelconque des revendications 2 à 4, caractérisé en ce que le bord (2) du manchon (1) est muni d'au moins une gorge (3) sur ses deux côtés longitudinaux et sur son côté étroit arrondi et en ce qu'au moins un bourrelet d'étanchéité (4) est formé sur son côté étroit rectiligne.

6. Manchon selon la revendication 5, caractérisé en ce qu'un évidement (9) parallèle au bourrelet (4) est formé sur le côté étroit rectiligne, dans la région duquel l'épaisseur du manchon (1) est réduite d'au moins moitié.

7. Manchon selon l'une quelconque des revendications 1 à 6, caractérisé en ce que l'épaisseur de la lèvre d'étanchéité (6) va en diminuant en direction du trou de traversée (7).

8. Manchon selon l'une quelconque des revendications 1 à 7, caractérisé par son agencement dans une paroi (13) sensiblement verticale, le joint de séparation (10) étant tourné vers le bas.
